# EUROPEAN PATENT APPLICATION

(11) **EP 4 678 415 A1**
(43) Date of publication of application: **14.01.2026**
(21) Application number: 23926423.7
(22) Date of filing: 13.11.2023
(51) Int. Cl.: B60C 9/00, B60C 9/18, B60C 9/20, B60C 9/22, D07B 1/06

(54) **STEEL CORD FOR TIRE, AND PNEUMATIC TIRE**

(30) Priority: 06.03.2023 JP 2023034080
(71) Applicant: BRIDGESTONE CORPORATION, Chuo-ku Tokyo 104-8340 (JP)
(72) Inventor: OBANA, Naohiko, Tokyo 104-8340 (JP)
(74) Representative: Marks & Clerk LLP
(86) International application number: PCT/JP2023/040811
(87) International publication number: WO 2024/185217

(57) **Abstract**

The steel cord for a tire of the present disclosure includes a plurality of filaments. For all of the filaments, a ratio B/A of a filament diameter B to a cord diameter A is 0.13 or less, an inflection point of an extracted cord including the steel cord is in a strain of 0.3% to 0.7% and a load of 100 N to 350 N, and an elastic modulus E1 in a high-strain region of the extracted cord is 30 GPa to 80 GPa. The pneumatic tire of the present disclosure includes one or more circumferential belt layers each composed of a rubberized layer of the steel cord for a tire. The steel cord for a tire extends in the tire circumferential direction or extends inclined at an inclination angle of 5° or less with respect to the tire circumferential direction.

## Description

### TECHNICAL FIELD

The present disclosure relates to a steel cord for a tire and a pneumatic tire.

### BACKGROUND

It has been proposed to arrange a circumferential belt layer in order to suppress the diameter growth of a pneumatic tire (for example, PTL 1, 2).

### CITATION LIST

### Patent Literatures

PTL 1: JP 2010-090509 A
PTL 2: JP 2011-178373 A

### SUMMARY

### (Technical Problem)

However, while the steel cord for a tire in the circumferential belt layer serves to suppress the diameter growth of the pneumatic tire by acting as a hoop, it also bears a large load during driving, and therefore, breakage of the cord is likely to occur due to repeated tensile fluctuations causing shrinkage and bending deformation of the helical filaments. For this reason, there is a demand for a steel cord for a tire that is excellent not only in suppressing the diameter growth of the pneumatic tire but also in resistance to breakage.

Accordingly, an object of the present disclosure is to provide a steel cord for a tire that achieves both the effect of suppressing the diameter growth of a pneumatic tire and resistance to breakage, and a pneumatic tire that achieves both suppression of diameter growth and durability.

### (Solution to Problem)

The gist of the configuration of the present disclosure is as follows.

A steel cord for a tire comprising a plurality of filaments,
wherein, for all of the filaments, a ratio B/A of a filament diameter B to a cord diameter A is 0.13 or less,
an inflection point of an extracted cord including the steel cord is in a strain of 0.3% to 0.7% and a load of 100 N to 350 N,
and an elastic modulus E1 in a high-strain region of the extracted cord is 30 GPa to 80 GPa.

Here, the "inflection point" refers to the intersection point of the tangent at 0.25% strain and the tangent at 1.0% strain on the load-strain curve of the extracted cord.

Further, the "extracted cord" refers to a cord with rubber, which is taken out by dissecting a vulcanized pneumatic tire.

Further, the "elastic modulus in a high-strain region" refers to a value obtained by dividing the slope of the tangent of the load-strain curve of the extracted cord at 1.0% strain by the total cross-sectional area of the filaments constituting the cord.

The "elastic modulus in a low-strain region" refers to a value obtained by dividing the slope of the tangent of the load-strain curve of the extracted cord at 0.25% strain by the total cross-sectional area of the filaments constituting the cord.

A pneumatic tire comprising:
two or more inclined belt layers each composed of a steel cord layer coated with rubber, the reinforcement cords extending so as to intersect each other between layers; and
one or more circumferential belt layers each composed of a steel cord layer coated with rubber of the above steel cord for a tire,
wherein the circumferential belt layer is disposed adjacent to the inclined belt layer,
and the steel cord for a tire extends in the tire circumferential direction or extends inclined at an inclination angle of 5° or less with respect to the tire circumferential direction.

### (Advantageous Effect)

According to the present disclosure, it is possible to provide a steel cord for a tire that achieves both the effect of suppressing the diameter growth of a pneumatic tire and resistance to breakage, and a pneumatic tire that achieves both suppression of diameter growth and durability.

### BRIEF DESCRIPTION OF THE DRAWINGS

In the accompanying drawings:
FIG. 1 is a diagram illustrating an example of an S-S curve (load-strain curve) of an extracted cord of a steel cord for a tire according to one embodiment of the present disclosure;
FIG. 2 is a diagram illustrating an example of an S-S curve (load-strain curve) of a green cord of a steel cord for a tire according to one embodiment of the present disclosure;
FIG. 3 is a cross-sectional view of a steel cord for a tire according to one embodiment of the present disclosure;
FIG. 4 is a cross-sectional view in the tire width direction of a pneumatic tire according to one embodiment of the present disclosure;

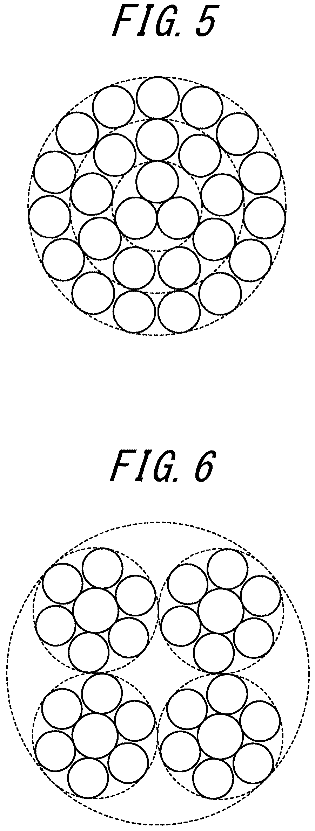

FIG. 5 is a cross-sectional view illustrating the cord structure of Comparative Example 1;
FIG. 6 is a cross-sectional view illustrating the cord structure of Comparative Example 2;
FIG. 7 is a diagram illustrating the S-S curves (load-strain curves) of extracted cords of each steel cord for a tire in the examples; and
FIG. 8 is a diagram illustrating the S-S curves (load-strain curves) of green cords of each steel cord for a tire in the examples.

Hereinafter, embodiments of the present disclosure will be illustrated and described in detail with reference to the drawings.

### (Steel Cord for Tire)

### [Physical Properties of Extracted Cord]

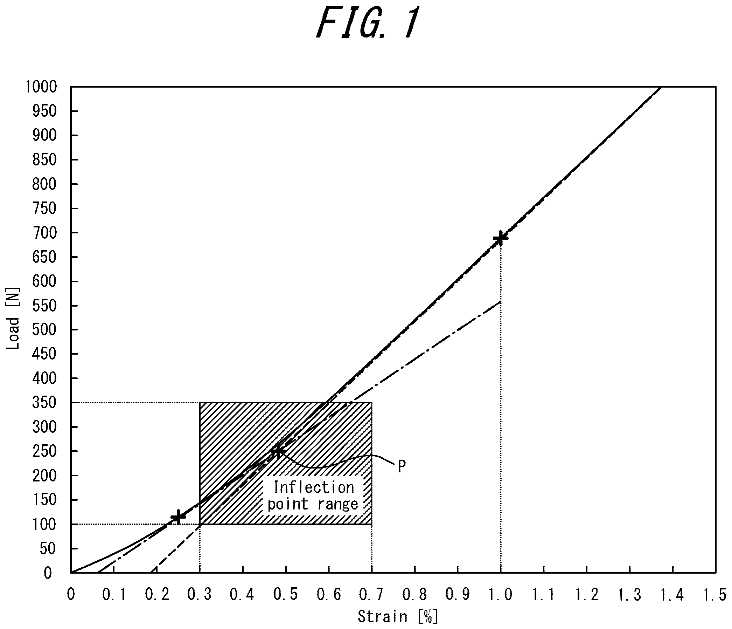

FIG. 1 is a diagram illustrating an example of an S-S curve (load-strain curve) of an extracted cord of a steel cord for a tire according to one embodiment of the present disclosure. In FIG. 1, the one-dot chain line is the tangent at 0.25% strain, the broken line is the tangent at 1.0% strain, and the inflection point P, as defined above, is the intersection point of these tangents. As defined above, the elastic modulus E1 is the value obtained by dividing the slope of the broken line by the total cross-sectional area of the filaments constituting the cord, and the elastic modulus E2 is the value obtained by dividing the slope of the one-dot chain line by the total cross-sectional area of the filaments constituting the cord.

The steel cord for a tire of the present embodiment (hereinafter also simply referred to as "cord") has an elastic modulus E1 in the high-strain region of the extracted cord of 30 GPa to 80 GPa. Further, the elastic modulus E2 in the low-strain region of the extracted cord is 15 GPa to 60 GPa.

If the elastic modulus E1 in the high-strain region of the extracted cord exceeds 80 GPa, when the steel cord for a tire of the present embodiment is used as a cord of a circumferential belt layer adjacent to an inclined belt layer in a pneumatic tire (hereinafter also simply referred to as "tire") (hereinafter also simply referred to as "when used in a tire"), the rigidity step between the circumferential belt layer and the inclined belt layer becomes large, the strain in that region also becomes large, and the cut resistance of the steel cord for a tire decreases. On the other hand, if the elastic modulus E1 in the high-strain region of the extracted cord is less than 30 GPa, the elastic modulus in the low-strain region also decreases accordingly, and when used in a tire, it becomes impossible to effectively suppress the radial growth of the tire when internal pressure is applied. For similar reasons, it is preferable that the elastic modulus E1 in the high-strain region of the extracted cord is 40 GPa to 70 GPa.

Further, by setting the elastic modulus E2 in the low-strain region of the extracted cord to 15 GPa or more, it is possible to effectively suppress the radial growth of the tire when internal pressure is applied, when used in a tire. On the other hand, by setting the elastic modulus E2 in the low-strain region of the extracted cord to 60 GPa or less, it is possible to set the elastic modulus in the high-strain region of the extracted cord within a desired range. For similar reasons, it is more preferable that the elastic modulus E2 in the low-strain region of the extracted cord is 25 GPa to 60 GPa.

The ratio E1/E2 of the elastic modulus E1 in the high-strain region of the extracted cord to the elastic modulus E2 in the low-strain region of the extracted cord is preferably 1.1 to 3.0. By setting the ratio E1/E2 to 1.1 or more, the elastic modulus E2 can be made appropriately large relative to the elastic modulus E1, thereby effectively suppressing the radial growth of the tire when internal pressure is applied. On the other hand, by setting the ratio E1/E2 to 3.0 or less, the elastic modulus E1 can be made appropriately small relative to the elastic modulus E2, thereby reducing the rigidity step between the circumferential belt layer and the inclined belt layer, reducing the strain in that region, and improving the cut resistance of the steel cord for a tire. For similar reasons, it is more preferable that the above ratio E1/E2 is 1.1 to 2.5.

Here, in the present embodiment, the inflection point P of the extracted cord is within a strain of 0.3% to 0.7% and a load of 100 N to 350 N. When the inflection point P is within a strain of 0.3% or more and 0.7% or less, and within a load of less than 100 N, the elastic modulus at low load is low, and it is not possible to sufficiently suppress the radial growth of the tire when internal pressure is applied. On the other hand, when the inflection point P is within a strain of 0.3% or more and 0.7% or less, and within a load exceeding 350 N, the elastic modulus at high load is high, and when used in a tire, due to the rigidity step between the circumferential belt layer and the inclined belt layer, the strain in that region becomes large, and sufficient cut resistance of the steel cord for a tire cannot be obtained. Further, when the inflection point P is within a load of 100 N or more and 350 N or less, and within a strain of less than 0.3%, the elastic modulus at high load is high, and when used in a tire, due to the rigidity step between the circumferential belt layer and the inclined belt layer, the strain in that region becomes large, and sufficient cut resistance of the steel cord for a tire cannot be obtained. On the other hand, when the inflection point P is within a load of 100 N or more and 350 N or less, and within a strain exceeding 0.7%, the elastic modulus in the low-strain region decreases, and when used in a tire, it becomes impossible to effectively suppress the radial growth of the tire when internal pressure is applied. From this perspective, it is more preferable that the inflection point P of the extracted cord is within a strain of 0.3% to 0.6% and a load of 100 N to 320 N.

Note that it is preferable that the elastic modulus of the extracted cord at a strain of 0.8% is 25 GPa to 75 GPa. It is also preferable that the elastic modulus of the extracted cord at a strain of 1.2% is 35 GPa to 80 GPa.

### [Physical Properties of Green Cord]

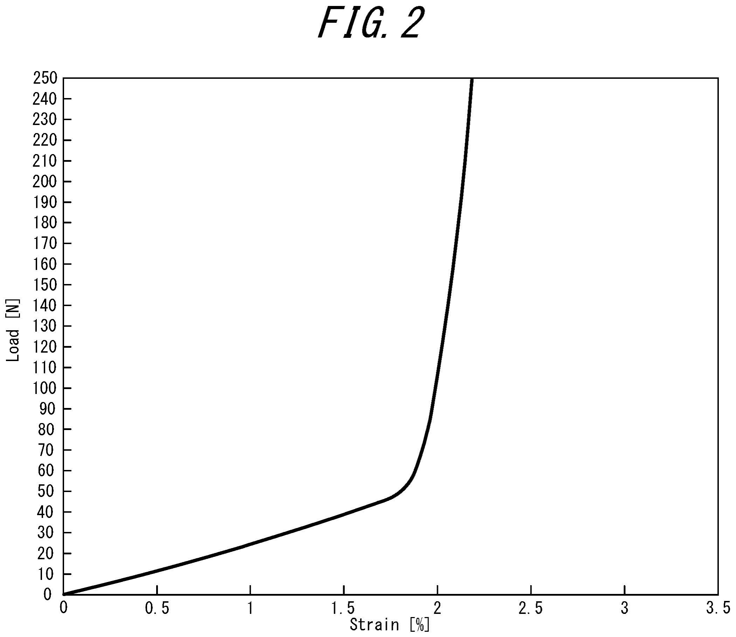

In order to obtain the above physical properties of the extracted cord, the physical properties of the green cord can be as follows. FIG. 2 is a diagram illustrating an example of an S-S curve (load-strain curve) of a green cord of a steel cord for a tire according to one embodiment of the present disclosure.

The elastic modulus E3 in the high-strain region of the green cord is preferably 30 GPa to 80 GPa, and more preferably 35 GPa to 75 GPa. Here, "elastic modulus in the high-strain region of the green cord" refers to the value obtained by dividing the slope of the tangent at a load of 200 N in the load-strain curve of the green cord by the total cross-sectional area of the filaments constituting the cord. Further, the elastic modulus E4 in the low-strain region of the green cord is preferably 1 GPa to 5 GPa, and more preferably 1 GPa to 3 GPa. Here, "elastic modulus in the low-strain region of the green cord" refers to the value obtained by dividing the slope of the tangent at a load of 10 N in the load-strain curve of the green cord by the total cross-sectional area of the filaments constituting the cord. By setting the elastic modulus in the low-strain region of the green cord to 1 GPa to 5 GPa, it is possible to manufacture an appropriate tire in the belt forming and tire vulcanization processes, and to effectively suppress the occurrence of buckling in the tire after vulcanization.

The ratio E3/E4 of the elastic modulus E3 in the high-strain region of the green cord to the elastic modulus E4 in the low-strain region of the green cord is preferably 20 to 50, and more preferably 25 to 45.

The inflection point of the green cord is preferably within a strain of 1.5% to 3.0% and a load of 30 N to 80 N, and more preferably within a strain of 1.5% to 3.0% and a load of 30 N to 70 N. Here, "inflection point of the green cord" refers to the intersection point of the tangent at a load of 10 N and the tangent at a load of 200 N in the load-strain curve of the green cord.

[Structure of Steel Cord for Tire]

### [[Cord Structure]]

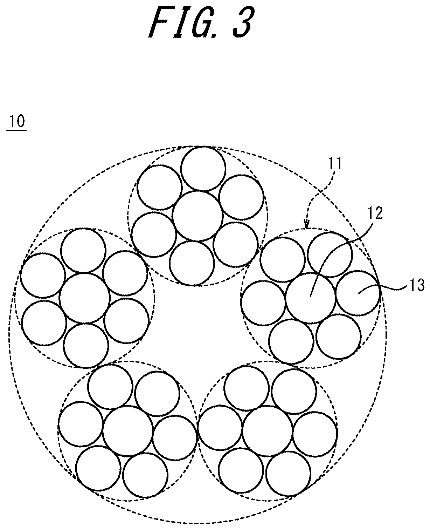

FIG. 3 is a cross-sectional view of a steel cord for a tire according to one embodiment of the present disclosure. As illustrated in FIG. 3, in this example, the cord 10 is composed of a plurality of sheath strands 11 (and does not have a core strand). Each sheath strand 11 is a so-called "1+N structure" in which N sheath filaments 13 (six in the illustrated example) are arranged around one core filament 12. N is preferably an integer from 4 to 7. Thus, the cord 10 of the present embodiment is a multiple-twist structure in which a plurality of filaments (one core filament 12 and six sheath filaments 13 in the illustrated example) are twisted together to form (five in the illustrated example) strands (sheath strands 11), which are further twisted together. The number of strands is preferably 3 to 5. By setting the number of strands to 3 or more, as described below, it is possible to ensure the strength as a circumferential belt layer even if the filament diameter is made relatively small, while by setting the number of strands to 5 or less, it is possible to suppress the occurrence of strand drop and stabilize the twisting characteristics. Further, by setting the number of core filaments 12 to one, it is possible to suppress the occurrence of twisting defects due to the difference in the amount of twisting shrinkage between the core filament 12 and the sheath filaments 13. Further, by setting the number of sheath filaments 13 to 4 or more, it is possible to stabilize the twisting shape so that the gaps between the sheath filaments do not become large, while by setting the number of sheath filaments 13 to 7 or less, it is possible to ensure sufficient gaps for rubber to penetrate. Further, by not providing a core strand, when the cord 10 is used in a tire, the space at the center of the cord 10 is filled with rubber, the tightening stress between the strands is dispersed, and premature breakage of the sheath filaments 13 at the contact portions is suppressed, resulting in good steel cord strength. Note that it is preferable that the twisting direction of the strands and the twisting direction of the cord are the same.

### [[Cord Diameter and Filament Diameter]]

In the present embodiment, for all filaments (in this example, one core filament 12 and six sheath filaments 13), the ratio B/A of the filament diameter B to the cord diameter A is 0.13 or less (preferably 0.11 or less). If the ratio B/A exceeds 0.13, the filament diameter B becomes large relative to the cord diameter A, and breakage of the filaments due to bending deformation of the filaments caused by tension on the cord is likely to occur. On the other hand, if the filament diameter B is too small, sufficient cord strength cannot be obtained, so the ratio B/A is preferably 0.09 or more.

The cord diameter A of the cord of the present embodiment is preferably 1.5 mm to 2.2 mm, and more preferably 1.9 mm to 2.2 mm. By setting the cord diameter A to 1.5 mm or more (more preferably 1.9 mm or more), it is possible to ensure the strength as a circumferential belt layer when used in a tire, while by setting it to 2.2 mm or less, it is possible to reduce the weight of the tire when used in a tire.

The filament diameter B of the filaments is preferably 0.3 mm or less, and more preferably 0.25 mm or less. By setting the filament diameter B to 0.3 mm or less, it is possible to suppress breakage of the filaments due to bending deformation of the filaments caused by tension on the cord. On the other hand, if the filament diameter B is too small, sufficient cord strength cannot be obtained, so the filament diameter B is preferably 0.15 mm or more.

The ratio B12/B13 of the filament diameter B12 of the core filament 12 to the filament diameter B13 of the sheath filaments 13 is preferably 1.10 to 1.16. By setting the ratio B12/B13 to 1.16 or less, it is possible to make the arrangement of the sheath filaments uniform and thereby make the twisting characteristics of the cord uniform, while by setting the ratio B12/B13 to 1.10 or more, it is possible to ensure sufficient gaps for rubber to penetrate.

### [[Twisting Angle]]

The twisting angle of the sheath strand 11 with respect to the cord axis is preferably 15.0° to 25.0°. The twisting angle refers to the angle formed by the helical axis of the strand with respect to the longitudinal direction of the steel cord, and is the average value in the longitudinal direction of the cord. By setting the twisting angle to 15.0° or more, it is possible to set the elastic modulus in the high-strain region of the green cord and the extracted cord to the upper limit or less, while by setting it to 25.0° or less, it is possible to stabilize the twisting characteristics.

### [Material of Filament]

In the cord of the present embodiment, the material of the filament is not particularly limited, but it is preferably high-carbon steel containing 0.80 mass% or more of carbon, for example. By using high-carbon steel containing 0.80 mass% or more of carbon, which is of high hardness, as the material of the filament, sufficient cord strength can be obtained. On the other hand, from the viewpoint of fatigue resistance, it is preferable that the carbon content is 1.5% or less.

### [Adjustment Method]

In order to set the elastic modulus E1 in the high-strain region of the extracted cord, for example, in the range of 30 GPa to 80 GPa, and the elastic modulus E2 in the low-strain region of the extracted cord, for example, in the range of 15 GPa to 60 GPa, adjustment can be made by adopting, for example, the following cord structure.

That is, in order to adjust the elastic modulus E1 in the high-strain region of the extracted cord to the above-mentioned lower range, a cord in which a plurality of filaments are twisted together to form strands, which are further twisted together, without a core strand, can be used. In addition, adjustment can be made by adjusting the filament diameter, number of strands, twisting angle, cord diameter, and so on. Further, the elastic modulus E2 in the low-strain region of the extracted cord can be determined according to the expansion ratio during tire manufacture, in addition to the above.

### [Effects (Steel Cord for Tire)]

As described above, when the inflection point P is within a strain of 0.3% or more and 0.7% or less, and within a load of less than 100 N, the elastic modulus at low load is low, and it is not possible to sufficiently suppress the radial growth of the tire when internal pressure is applied. On the other hand, when the inflection point P is within a strain of 0.3% or more and 0.7% or less, and within a load exceeding 350 N, the elastic modulus at high load is high, and when used in a tire, due to the rigidity step between the circumferential belt layer and the inclined belt layer, the strain in that region becomes large, and sufficient cut resistance of the steel cord for a tire cannot be obtained.

Further, as described above, when the inflection point P is within a load of 100 N or more and 350 N or less, and within a strain of less than 0.3%, the elastic modulus at high load is high, and when used in a tire, due to the rigidity step between the circumferential belt layer and the inclined belt layer, the strain in that region becomes large, and sufficient cut resistance of the steel cord for a tire cannot be obtained. On the other hand, when the inflection point P is within a load of 100 N or more and 350 N or less, and within a strain exceeding 0.7%, the elastic modulus in the low-strain region decreases, and when used in a tire, it becomes impossible to effectively suppress the radial growth of the tire when internal pressure is applied.

Further, as described above, if the elastic modulus E1 in the high-strain region of the extracted cord exceeds 80 GPa, when used in a tire, the rigidity step between the circumferential belt layer and the inclined belt layer becomes large, the strain in that region also becomes large, and the cut resistance of the steel cord for a tire decreases. Further, as described above, if the elastic modulus E1 in the high-strain region of the extracted cord is less than 30 GPa, the elastic modulus in the low-strain region also decreases accordingly, and when used in a tire, it becomes impossible to effectively suppress the radial growth of the tire when internal pressure is applied.

Further, as described above, if the ratio B/A exceeds 0.13, the filament diameter B becomes large relative to the cord diameter A, and breakage of the filaments due to bending deformation of the filaments caused by tension on the cord is likely to occur.

For these reasons, in the steel cord for a tire of the present embodiment, for all filaments, the ratio B/A of the filament diameter B to the cord diameter A is 0.13 or less, the inflection point of the extracted cord composed of the steel cord is within a strain of 0.3% to 0.7% and a load of 100 N to 350 N, and the elastic modulus E1 in the high-strain region of the extracted cord is 30 GPa to 80 GPa.

According to the steel cord for a tire of the present embodiment, it is possible to achieve both suppression of radial growth of a pneumatic tire and cut resistance.

Here, as described above, it is preferable that the ratio E1/E2 of the elastic modulus E1 in the high-strain region of the extracted cord to the elastic modulus E2 in the low-strain region of the extracted cord is 1.1 to 3.0. As described above, by setting the ratio E1/E2 to 1.1 or more, it is possible to effectively suppress the radial growth of the tire when internal pressure is applied, while by setting the ratio E1/E2 to 3.0 or less, it is possible to reduce the rigidity step between the circumferential belt layer and the inclined belt layer, reduce the strain in that region, and improve the cut resistance of the steel cord for a tire.

Further, as described above, in the steel cord for a tire of the present embodiment, it is preferable that the elastic modulus E2 in the low-strain region of the extracted cord is 15 GPa to 60 GPa. As described above, by setting the elastic modulus E2 in the low-strain region of the extracted cord to 15 GPa or more, it is possible to effectively suppress the radial growth of the tire when internal pressure is applied, while by setting the elastic modulus E2 in the low-strain region of the extracted cord to 60 GPa or less, it is possible to set the elastic modulus in the high-strain region of the extracted cord within a desired range.

Further, as described above, in the steel cord for a tire of the present embodiment, it is preferable that the cord is formed by further twisting together strands formed by twisting together a plurality of filaments, and the number of strands is 3 to 5. This is because the elastic modulus E1 in the high-strain region of the extracted cord can be made appropriately low, thereby improving the cut resistance of the cord. Further, by setting the number of strands to 3 or more, it is possible to ensure the strength as a circumferential belt layer even if the filament diameter is made relatively small, while by setting the number of strands to 5 or less, it is possible to suppress the occurrence of strand drop and stabilize the twisting characteristics.

Further, as described above, in the steel cord for a tire of the present embodiment, the structure of the strand is a 1+N structure, N is an integer from 4 to 7, and the filament diameter of the filaments is preferably 0.3 mm or less. As described above, by setting the number of core filaments 12 to one, it is possible to suppress the occurrence of twisting defects due to the difference in the amount of twisting shrinkage between the core filament 12 and the sheath filaments 13, and by setting the number of sheath filaments 13 to 4 or more, it is possible to stabilize the twisting shape so that the gaps between the sheath filaments do not become large, while by setting the number of sheath filaments 13 to 7 or less, it is possible to ensure sufficient gaps for rubber to penetrate. Further, by not providing a core strand, when the cord 10 is used in a tire, the space at the center of the cord 10 is filled with rubber, the tightening stress between the strands is dispersed, and premature breakage of the sheath filaments 13 at the contact portions is suppressed, resulting in good steel cord strength. Further, by setting the filament diameter of the filaments to 0.3 mm or less, it is possible to suppress breakage of the filaments due to bending deformation of the filaments caused by tension on the cord.

### (Pneumatic Tire)

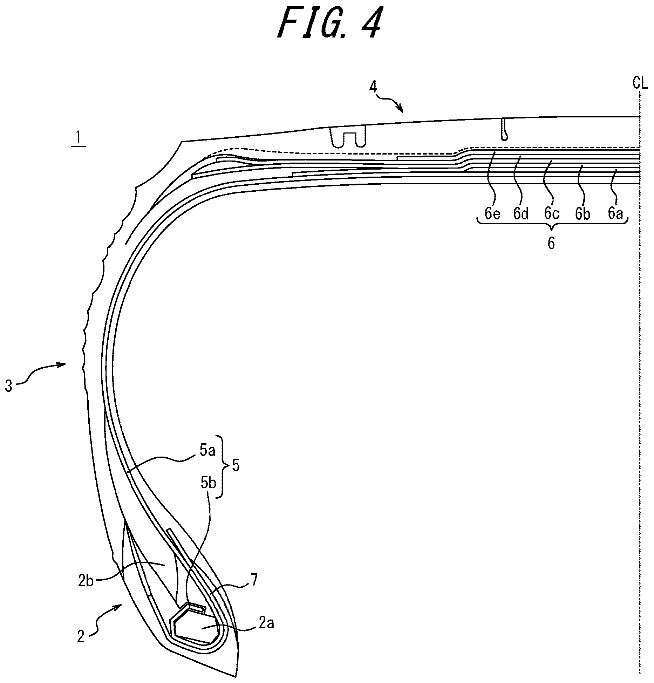

FIG. 4 is a cross-sectional view in the tire width direction of a pneumatic tire according to one embodiment of the present disclosure. In FIG. 4, only one half portion in the tire width direction with the tire equatorial plane CL as the boundary is illustrated, but the other half portion has the same configuration.

As illustrated in FIG. 4, the tire 1 of the present embodiment includes a pair of bead portions 2, a pair of sidewall portions 3 each connected to a bead portion 2, and a tread portion 4 connected to the pair of sidewall portions 3. Further, the tire 1 further includes a carcass 5 extending toroidally between the pair of bead portions 2, and a reinforcement layer 6 disposed on the tire radial outer side of the crown portion of the carcass 5.

In the illustrated example, a bead core 2a is embedded in each of the pair of bead portions 2, and a bead filler 2b is disposed on the tire radial outer side of the bead core 2a.

Further, in the illustrated example, the carcass 5 is composed of one or more carcass plies. The carcass 5 includes a carcass main body portion 5a that extends in a toroidal shape between the pair of bead portions 2, and a carcass wound portion 5b that extends from the carcass main body portion 5a and is wound around the bead core 2a. In the illustrated example, a wire chafer 7 is disposed around the bead core 2a, on the outer periphery of the carcass wound portion 5b.

The reinforcement layer (belt) 6, in the illustrated example, is composed of five reinforcement layers 6a to 6e. In the illustrated example, the belt layer 6a is a rubberized layer of reinforcement cords extending at an inclination angle of approximately 90° with respect to the tire circumferential direction. The belt layer 6b is composed of reinforcement cords extending in the tire circumferential direction, or extending at an inclination angle of 5° or less with respect to the tire circumferential direction. In the pneumatic tire of the present embodiment, the steel cord for a tire of the above embodiment is used as the reinforcement cord of the belt layer 6b. The belt layers 6c and 6d are inclined belt layers, each being a rubberized layer of reinforcement cords extending so as to intersect each other between layers and extending at an inclination angle of, for example, 15° to 50° with respect to the tire circumferential direction. By setting the inclination angle of the belt cords of the inclined belt layers with respect to the tire circumferential direction to 15° or more, wear resistance can be further improved, while by setting it to 50° or less, the durability of the circumferential belt layer and the effect of suppressing the radial growth of the tire can be further enhanced. The belt layer 6e is a protective belt layer, which is a rubberized layer of reinforcement cords extending at an inclination angle of, for example, 15° to 50° with respect to the tire circumferential direction. In this example, in the same half portion in the tire width direction, with the tire equatorial plane CL as the boundary, the reinforcement cords of the belt layer 6d and the reinforcement cords of the belt layer 6e extend in the same direction in the tire circumferential direction from the inner side to the outer side in the tire width direction.

In the illustrated example, the belt layers are arranged in the order of belt layers 6a, 6b, 6c, 6d, and 6e from the tire radial inner side. That is, in this example, the circumferential belt layer 6b is disposed adjacent to the tire radial inner side of the inclined belt layers 6c and 6d (in this example, without any other belt layer interposed therebetween).

In the illustrated example, the widths of the belt layers in the tire width direction, in descending order, are belt layers 6c, 6d, 6b, 6e, and 6a, but the present invention is not limited to this case. The number of layers of the belt layers and the widths of the belt layers in the tire width direction can be variously configured.

Although not particularly limited, the tire of the present embodiment can be suitably used as a heavy-duty tire, such as a tire for trucks or buses.

As described above, the pneumatic tire of the present embodiment includes two or more inclined belt layers (in this example, belt layers 6c and 6d) each composed of a rubberized layer of reinforcement cords extending so as to intersect each other between layers, and one or more circumferential belt layers 6b each composed of a rubberized layer of the steel cord for a tire of the above embodiment, wherein the circumferential belt layer 6b is disposed adjacent to the inclined belt layers 6c and 6d (in this example, adjacent to the tire radial inner side of the inclined belt layers 6c and 6d), and the steel cord for a tire extends in the tire circumferential direction or extends inclined at an inclination angle of 5° or less with respect to the tire circumferential direction.

According to the pneumatic tire of the present embodiment, for the same reasons as described in the above embodiment of the steel cord for a tire, both suppression of radial growth and durability can be achieved.

### EXAMPLES

Hereinafter, examples of the present invention will be described, but the present invention is not limited to the following examples.

In order to confirm the effects of the present invention, pneumatic tires using steel cords for tires according to a reference example, a comparative example, and an inventive example were produced, and tests were conducted to evaluate the effect of suppressing radial growth of the tire and the cut resistance of the steel cord for a tire.

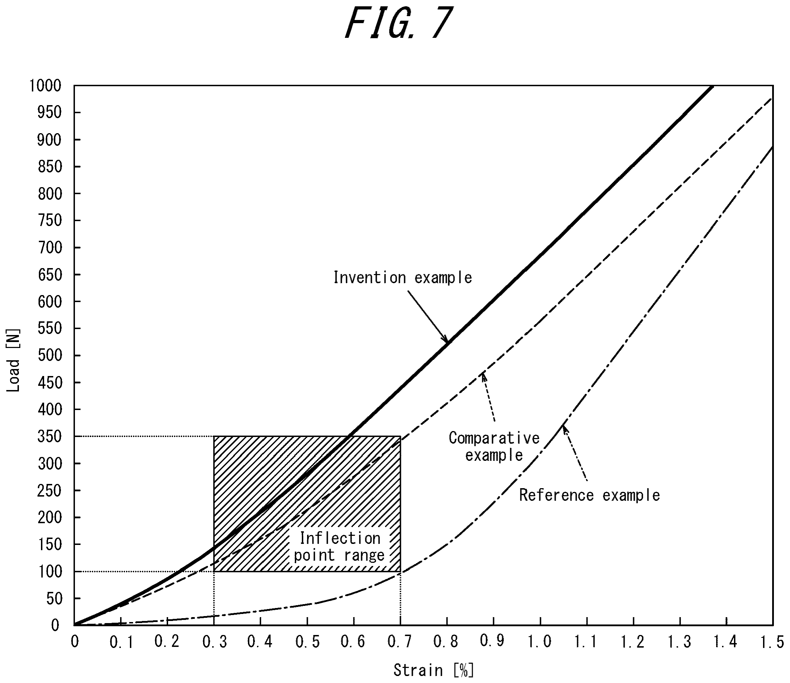

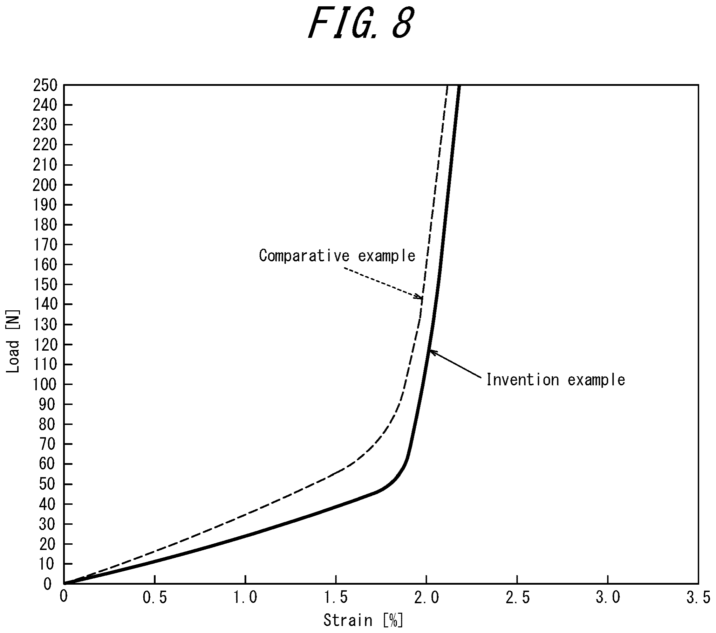

The specifications of each steel cord for a tire are presented in Table 1 below together with the evaluation results. In addition, FIG. 7 and FIG. 8 respectively illustrate the S-S curves of the extracted cord and the green cord.

In the comparative example and the inventive example, the effect of suppressing radial growth of the tire was evaluated by assembling a tire of size 445/50R22.5 onto a rim, and measuring the tire diameter before and after filling with an internal pressure of 690 kPa for the tires of the comparative example and the inventive example. For the reference example, a tire available on the market was used, and although the belt structure differs from those of the comparative example and the inventive example, a tire of the same size was assembled onto a rim, and the tire diameter before and after filling with an internal pressure of 690 kPa was measured.

In Table 1, the values indicate the increased tire diameter expressed as a percentage. The smaller the value, the better the effect of suppressing radial growth. Note that, although a belt structure different from those of the inventive example and the comparative example was used for the reference example, this is because the position of the reference example is to demonstrate, by comparison of suppression of internal pressure growth between the inventive example and the reference example, that the effect of the inventive example reaches the reference value, and in this sense, it does not affect the demonstration of the effect.

The cut resistance of the steel cord for a tire was evaluated by assembling a tire of size 445/50R22.5 onto a rim, filling it with the prescribed internal pressure, applying a load of 130% of the maximum load, and measuring the number of cord breaks after running 20,000 km on a drum at a speed of 60 km/h. The evaluation is expressed as an index with the number of breaks in the reference example set to 100, and the larger the value, the fewer the breaks and the better the result.

**[Table 1]**

| | | Reference Example | Comparative Example | Inventive Example |
|---|---|---|---|---|
| Green cord | Cord structure | 3+9+15×0.23 | 4×(0.28+6×0.25) | 5×(0.255+6×0.225) |
| | Drawing | FIG. 5 | FIG. 6 | FIG. 3 |
| | Cord diameter (mm) | 1.40 | 1.96 | 1.98 |
| | Maximum value of filament diameter / cord diameter | 0.164 | 0.143 | 0.129 |
| | Inflection point (strain: %) | - | 1.89 | 1.97 |
| | Inflection point (load: N) | - | 64 | 46 |
| | Low-strain region (elastic modulus: GPa) | - | 2.4 | 1.6 |
| | High-strain region (elastic modulus: GPa) | - | 57 | 65 |
| Extracted cord | Inflection point (strain: %) | 0.74 | 0.56 | 0.49 |
| | Inflection point (load: N) | 49 | 216 | 248 |
| | Low-strain region (elastic modulus: GPa) | 7 | 28 | 39 |
| | High-strain region (elastic modulus: GPa) | 92 | 55 | 59 |
| Evaluation | Internal pressure growth % (effect of suppressing diameter growth) | 0.41 | 0.61 | 0.48 |
| | Cut resistance effect | 100 | 75 | 450 |

As indicated in Table 1, it can be seen that the inventive example achieved both the effect of suppressing radial growth of the pneumatic tire and cut resistance, as compared to the reference example and the comparative example.

### [Contribution to the Sustainable Development Goals (SDGs) led by the United Nations]

The SDGs have been proposed for the realization of a sustainable society. One embodiment of the present invention is considered to be a technology that can contribute to, for example, "No. 12: Responsible Consumption and Production" and "No. 13: Climate Action."

### REFERENCE SIGNS LIST

1: pneumatic tire (tire),
2: bead portion,
3: sidewall portion,
4: tread,
5: carcass,
6: reinforcement layer,
7: wire chafer,
10: steel cord for a tire,
11: sheath strand,
12: core filament,
13: sheath filament,
CL: tire equatorial plane

## Claims

1. A steel cord for a tire, the steel cord comprising a plurality of filaments, wherein,
for all of the filaments, a ratio B/A of a filament diameter B to a cord diameter A is 0.13 or less,
an inflection point of an extracted cord including the steel cord is in a strain of 0.3% to 0.7% and a load of 100 N to 350 N,
and an elastic modulus E1 in a high-strain region of the extracted cord is 30 GPa to 80 GPa.

2. The steel cord for a tire according to claim 1, wherein a ratio E1/E2 of the elastic modulus E1 in the high-strain region of the extracted cord to an elastic modulus E2 in a low-strain region of the extracted cord is 1.1 to 3.0.

3. The steel cord for a tire according to claim 2, wherein the elastic modulus E2 in the low-strain region of the extracted cord is 15 GPa to 60 GPa.

4. The steel cord for a tire according to any one of claims 1 to 3, wherein the steel cord is formed by twisting together strands, each formed by twisting together the plurality of filaments, and the number of strands is 3 to 5.

5. The steel cord for a tire according to claim 4, wherein a structure of each of the strands is a 1+N structure, N is an integer from 4 to 7, and a filament diameter of each of the filaments is 0.3 mm or less.

6. A pneumatic tire comprising:
two or more inclined belt layers each composed of a rubberized layer of reinforcement cords extending so as to intersect each other between layers;
and one or more circumferential belt layers each composed of a rubberized layer of the steel cord for a tire according to any one of claims 1 to 5,
wherein the circumferential belt layer is disposed adjacent to the inclined belt layer,
and the steel cord for a tire extends in the tire circumferential direction or extends inclined at an inclination angle of 5° or less with respect to the tire circumferential direction.
